# EUROPEAN PATENT APPLICATION

(11) **EP 4 567 206 A1**
(43) Date of publication of application: **11.06.2025**
(21) Application number: 23874797.6
(22) Date of filing: 02.10.2023
(51) Int. Cl.: E02F 9/24, E02F 9/26

(54) **WORKING MACHINE**

(30) Priority: 03.10.2022 JP 2022159483
(71) Applicant: Hitachi Construction Machinery Co., Ltd., Tokyo 110-0015 (JP)
(72) Inventor: MORIKI, Hidekazu, Tsuchiura-shi, Ibaraki 300-0013 (JP); SEKINE, Kazuya, Tsuchiura-shi, Ibaraki 300-0013 (JP); IMURA, Shinya, Tsuchiura-shi, Ibaraki 300-0013 (JP)
(74) Representative: Manitz Finsterwald Patent- und Rechtsanwaltspartnerschaft mbB
(86) International application number: PCT/JP2023/035842
(87) International publication number: WO 2024/075670

(57) **Abstract**

Provided is a working machine capable of selecting more appropriate operation in accordance with a surrounding environment and an operating mode when an obstacle is detected. The working machine includes an obstacle detecting sensor that detects an obstacle and a control device that controls the working machine based on a detection result of the obstacle detecting sensor, in which the control device determines whether the obstacle should be bypassed, in accordance with a position of the working machine within a work site when the obstacle is detected or an operating mode of the working machine when the obstacle is detected, and changes a control content of the working machine based on a determination result.

## Description

### Technical Field

The present invention relates to a working machine.

### Background Art

Conventionally, a working machine that performs a predetermined operation for avoiding a crash has been proposed (for example, Patent Literature 1). Patent Literature 1 describes a wheel loader including a sensor for measuring the distance between a dump truck and a boom of the wheel loader and a controller that controls operation of the wheel loader. When the wheel loader travels and the distance between the dump truck and the boom becomes equal to or smaller than a threshold, the controller described in Patent Literature 1 controls the predetermined operation for avoiding a crash (raising the boom, stopping traveling of the wheel loader, outputting alerting sound or alerting display).

### Citation List

### Patent Literature

Patent Literature 1: WO 2018/043104 A1

### Summary of Invention

### Technical Problem

A wheel loader performs work of excavating soil and sand or the like using a bucket and work of loading the excavated soil and sand or the like onto a dump truck. During such a series of work of the wheel loader, soil and sand or the like occasionally drop from the bucket onto the ground surface. According to a technique described in Patent Literature 1, obstacles such as soil and sand measured by a sensor are recognized to be a loading target, and when the distance between the soil and sand or the like and the boom becomes equal to or smaller than a threshold, the wheel loader could stop traveling.

Now, the wheel loader performs work under various surrounding environments and in various operating modes (operating forms). For example, when the wheel loader is operating in a relatively spacious work area or the wheel loader is traveling, it may occasionally be appropriate to continue the operation by bypassing soil and sand or the like instead of stopping the operation of the wheel loader.

Meanwhile, when the wheel loader is operating in a relatively narrow work area or the wheel loader is performing excavation, it may occasionally be appropriate to continue traveling over soil and sand or the like instead of stopping the operation of the wheel loader.

In the technique described in Patent Literature 1, when the distance between soil and sand or the like and the boom becomes equal to or smaller than a threshold, the traveling of the wheel loader could be uniformly stopped, and thus, more appropriate operation in accordance with a surrounding environment and an operating mode in which the wheel loader operates cannot be selected in some cases.

The present invention has been made in view of the aforementioned problem, and an object of the present invention is to provide a working machine capable of selecting more appropriate operation in accordance with a surrounding environment and an operating mode when an obstacle is detected.

### Solution to Problem

To achieve the aforementioned object, a working machine according to the present invention is a working machine including an obstacle detecting sensor that detects an obstacle and a control device that controls the working machine based on a detection result of the obstacle detecting sensor, in which the control device determines whether the obstacle should be bypassed, in accordance with a position of the working machine within a work site when the obstacle is detected or an operating mode of the working machine when the obstacle is detected, and changes a control content of the working machine based on a determination result.

### Advantageous Effects of Invention

According to the present invention, it is possible to provide a working machine that selects more appropriate operation in accordance with a surrounding environment and an operating mode when an obstacle is detected.

### Brief Description of Drawings

Fig. 1 is a perspective view schematically showing a working machine according to a first embodiment.
Fig. 2 is a system configurational diagram schematically showing a control system of the working machine according to the first embodiment.
Fig. 3 is a functional block diagram of an automatic driving control device of the working machine according to the first embodiment.
Fig. 4 is a plan view schematically showing an example of a moving range of the working machine according to the first embodiment.
Fig. 5 is a flowchart showing a computing process performed at a behavior management section of the working machine according to the first embodiment.
Fig. 6 is a chart showing an example of a determination process for an operating mode and a target position that is performed at the behavior management section of the working machine according to the first embodiment.
Fig. 7 is a flowchart showing the computing process performed at the behavior management section of the working machine according to a modification of the first embodiment.
Fig. 8 is a system configurational diagram schematically showing the control system of the working machine according to a second embodiment.
Fig. 9 is a functional block diagram of an alarm control device of the working machine according to the second embodiment.
Fig. 10 is a flowchart showing a computing process performed at an alarm management section of the working machine according to the second embodiment.
Fig. 11 is a flowchart showing the computing process performed at the alarm management section of the working machine according to a modification of the second embodiment.

### Description of Embodiments

### <First embodiment>

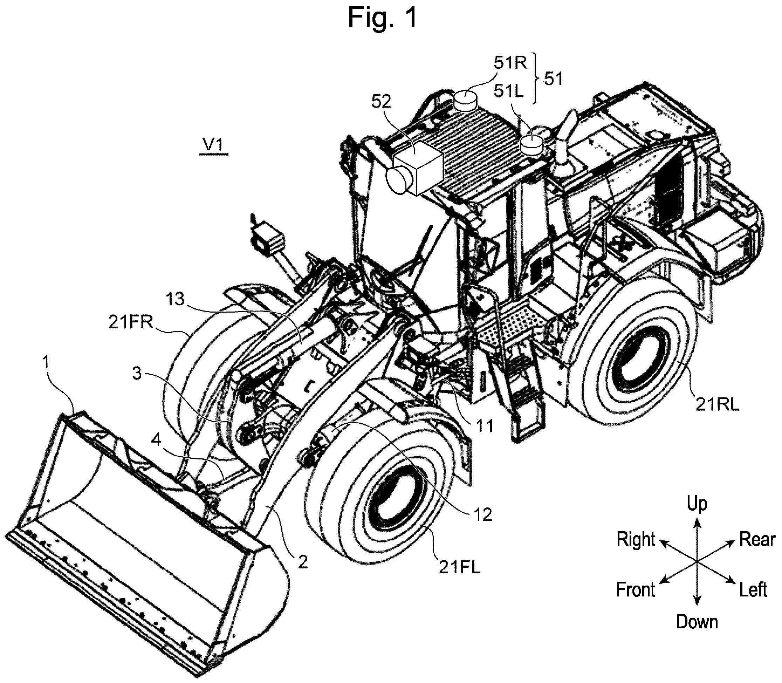

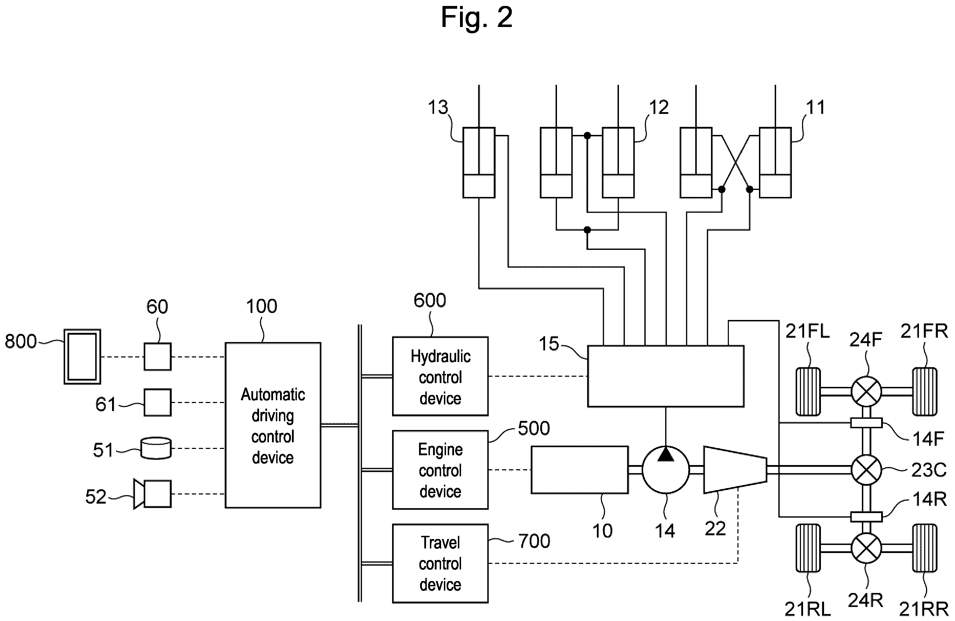

Hereinafter, a wheel loader V1 as a working machine according to a first embodiment of the present invention will be described as an example by referring to the drawings. By referring to Fig. 1 and Fig. 2, the schematic configuration of the wheel loader V1 and the system configuration of a control system according to the present embodiment will be described. Fig. 1 is a perspective view schematically showing the wheel loader V1 according to the first embodiment. Fig. 2 is a system configurational diagram schematically showing the control system of the wheel loader V1.

As a matter of convenience, "front," "rear," "left," and "right" are defined on the basis of a forward direction of the wheel loader V1 shown in Fig. 1 and "up" and "down" are defined on the basis of the gravity. That is, arrows with "front" and "rear" shown in Fig. 1 indicate the forward direction and the reverse direction of the wheel loader V1 and arrows with "up" and "down" indicate the up-down direction of the wheel loader V1. Further, the left-right (vehicle width) direction of the wheel loader V1 is defined as a direction perpendicular to the aforementioned front-rear direction and the up-down direction.

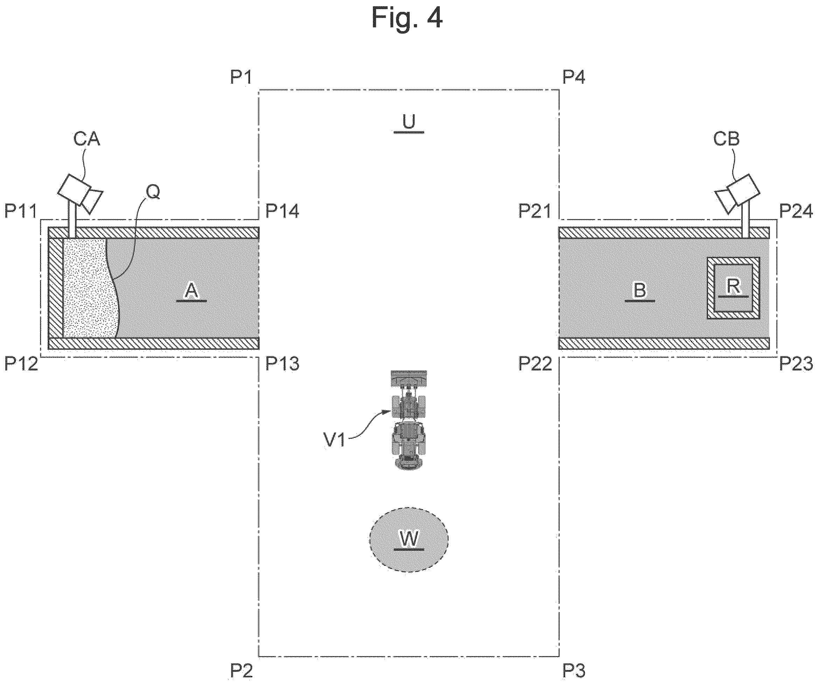

The wheel loader V1 is a machine that excavates soil and sand or the like using a bucket 1, transports the excavated soil and sand or the like, and loads the excavated soil and sand or the like onto a loading target R (Fig. 4) such as a dump truck. As shown in Fig. 1, the wheel loader V1 includes, on a front side in the forward direction, the bucket 1 as a work implement and a lift arm 2 that rotatably supports the bucket 1. The lift arm 2 is rotatably supported on a vehicle body of the wheel loader V1. Further, a bell crank 3 is rotatably supported on the lift arm 2. The bell crank 3 rotates the bucket 1 relative to the lift arm 2 via a bucket link 4.

As shown in Fig. 1 and Fig. 2, the wheel loader V1 includes a front right tire 21FR, a front left tire 21FL, a rear right tire 21RR, and a rear left tire 21RL and drives these tires to travel.

Further, the wheel loader V1 includes an articulated steering mechanism, and turns by creating an angular difference between a front side vehicle body and a rear side vehicle body, having a center joint 23C as an axis, which extends in a vertical direction (up-down direction) of the vehicle body. The center joint 23C has a function of distributing a drive force of an engine 10 to a front differential device 24F and a rear differential device 24R as will be described later, in addition to the function of creating the angular difference between the front side vehicle body and the rear side vehicle body of the wheel loader V1.

The wheel loader V1 includes the engine 10 as a power source, a hydraulic pump 14 driven by the engine 10, and a drive force transmission device 22. The drive force of the engine 10 is transmitted to the center joint 23C via the drive force transmission device 22. The drive force of the engine 10 is distributed to the front differential device 24F and the rear differential device 24R via the center joint 23C.

Further, the drive force of the engine 10 is distributed to each tire (the front left tire 21FL, the front right tire 21FR, the rear left tire 21RL, the rear right tire 21RR) via the front differential device 24F and the rear differential device 24R. In this manner, the wheel loader V1 travels.

The hydraulic pump 14 is driven by the engine 10 to supply an operating oil to a control valve 15. The operating oil is distributed at the control valve 15 to be supplied to a steering cylinder 11, a lift cylinder 12, a bucket cylinder 13, and brakes 14F, 14R.

The steering cylinder 11, the lift cylinder 12, and the bucket cylinder 13 expand and retract with the supplied operating oil to change an angle between the front side vehicle body and the rear side vehicle body, an angle of the lift arm 2 relative to the vehicle body, and an angle of the bucket 1 relative to the lift arm 2.

Further, the brakes 14F, 14R close with the supplied operating oil so that the rotation of each tire (the front left tire 21FL, the front right tire 21FR, the rear left tire 21RL, the rear side right tire 21RR) is inhibited and the wheel loader V1 decelerates to stop.

Furthermore, the wheel loader V1 includes an automatic driving control device 100, an engine control device 500, a hydraulic control device 600, a travel control device 700, a communication interface 60, a moving body detected information reception device (moving body acquisition device) 61, a positioning device 51, and an obstacle detecting sensor 52.

As shown in Fig. 1, the positioning device 51 includes a first positioning device 51R provided on a vehicle body right side and a second positioning device 51L provided on a vehicle body left side on a vehicle body upper side of the wheel loader V1. The positioning device 51 is a publicly-known GNSS (Global Navigation Satellite System), but the positioning device 51 of the present embodiment is not limited thereto. For example, the positioning device 51 may be configured with publicly-known SLAM (Simultaneous Localization and Mapping) using a camera or LiDAR. The positioning device 51 acquires position information on the wheel loader V1 and transmits the position information to the automatic driving control device 100.

The obstacle detecting sensor 52 is provided on the front side on the vehicle body upper side of the wheel loader V1. The obstacle detecting sensor 52 detects an obstacle in the surrounding (for example, on the front side) of the wheel loader V1 and transmits the obstacle information to the automatic driving control device 100. The obstacle detecting sensor 52 only needs to be capable of detecting an obstacle and may be configured with, for example, publicly-known LiDAR or millimeter wave radar.

The obstacles in the present embodiment are soil and sand or the like dropped from the bucket 1 during the excavation work or the loading work, the positions of which cannot be stored in the automatic driving control device 100 in advance. A retaining wall that surrounds an excavation area A or a loading area B and the like, whose positions can be stored in the automatic driving control device 100 in advance, are not included in the obstacle in the present embodiment. Further, the obstacle in the present embodiment is less likely to be damaged or the like even when contacted by the wheel loader V1. A working machine other than the wheel loader V1 and the loading target R, an operator, and the like (a moving body described later) are highly likely to be damaged or the like when contacted by the wheel loader V1, and thus are not included in the obstacle in the present embodiment.

The communication interface 60 only needs to be capable of acquiring communication information from an external process management terminal 800, and may be, for example, wireless communication equipment installed in the wheel loader V1.

The process management terminal 800 is a terminal for transmitting communication information to each working machine on a work site. The process management terminal 800 may transmit the communication information by having a supervisor of the work site manually create the communication information. The process management terminal 800 may transmit the communication information by acquiring an overall work progress on the work site using a sensor or the like and automatically creating communication information. Examples of the communication information transmitted from the process management terminal 800 include map data (for example, Fig. 4) indicating a moving range of the wheel loader V1, a work content (excavation work, loading work, and the like) of the wheel loader V1, the number of times of work, an excavation position of an excavation object, and a loading position of an excavation object.

The moving body detected information reception device 61 is a device that acquires moving body detected information indicating that a moving body other than the wheel loader (own vehicle) V1 according to the present embodiment is detected and that is installed in the wheel loader V1. The moving body detected information reception device 61 acquires the moving body detected information from monitoring devices CA, CB installed in predetermined areas (an excavation area A, a loading area B) described later. In the present embodiment, the moving body is a mobile target other than the wheel loader V1 and the loading target R, and the examples include a working machine (another wheel loader or the like) or an operator.

In the present embodiment, a case in which the wheel loader V1 includes the moving body detected information reception device 61 separate from the communication interface 60 will be described, but the moving body detected information reception device 61 may be omitted by including the moving body detected information in the communication information acquired at the communication interface 60.

As shown in Fig. 2, the automatic driving control device 100 acquires the communication information transmitted from the process management terminal 800, via the communication interface 60, acquires the moving body detected information via the moving body detected information reception device 61, acquires the position information on the wheel loader V1 via the positioning device 51, and acquires the obstacle information in the surrounding of the wheel loader V1 via the obstacle detecting sensor 52.

The automatic driving control device 100 generates an engine control signal, a hydraulic control signal, and a travel control signal based on these pieces of information and transmits these signals to the engine control device 500, the hydraulic control device 600, and the travel control device 700, respectively.

The engine control device 500 controls an engine speed of the engine 10 based on the engine control signal. The hydraulic control device 600 controls an opening/closing degree of the control valve 15 based on the hydraulic control signal. The travel control device 700 controls a change gear ratio and a rotating direction of the drive force transmission device 22 based on the travel control signal.

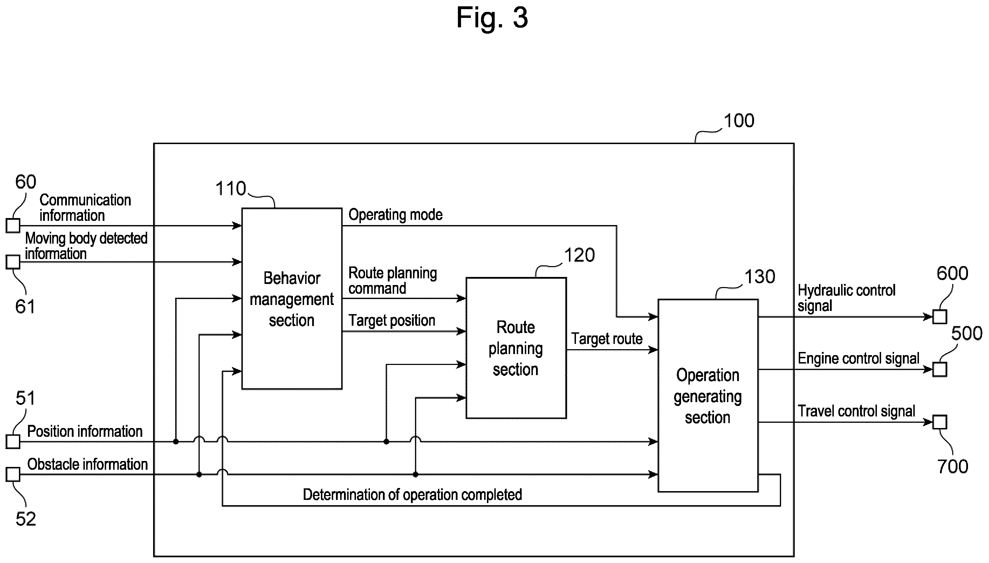

Next, with reference to Fig. 3, the function of the automatic driving control device 100 according to the present embodiment will be described. Fig. 3 is a functional block diagram of the automatic driving control device 100 of the wheel loader V1. The automatic driving control device 100 includes a behavior management section 110, a route planning section 120, and an operation generating section 130. The behavior management section 110 corresponds to the control device according to the present invention.

The behavior management section 110 acquires communication information via the communication interface 60, acquires moving body detected information via the moving body detected information reception device 61, acquires position information on the wheel loader V1 via the positioning device 51, acquires obstacle information via the obstacle detecting sensor 52, and acquires information on determination of operation completed from the operation generating section 130.

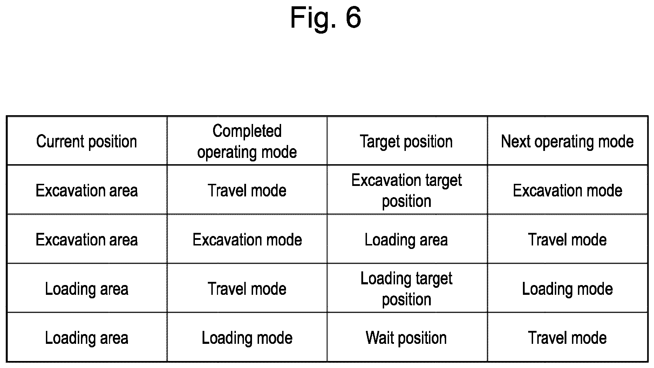

The behavior management section 110 determines the next operating mode of the wheel loader V1 based on map data indicating a moving range of the wheel loader V1 included in the aforementioned communication information, the aforementioned position information, and the aforementioned information on determination of operation completed, and transmits the operating mode to the operation generating section 130. Note that the operating mode of the wheel loader V1 indicates an aspect of the operation of the wheel loader V1. The behavior management section 110 can determine, as the operating mode of the wheel loader V1, a travel mode in which a travel operation is mainly performed, an excavation mode in which an excavation operation is mainly performed, or a loading mode in which a loading operation is mainly performed (Fig. 6).

Further, the behavior management section 110 computes a target position corresponding to the next operating mode of the wheel loader V1 based on the aforementioned position information and the aforementioned map data, and transmits, to the route planning section 120, a route planning command together with the target position. The behavior management section 110 computes own vehicle position in the moving range of the wheel loader V1 by comparing the aforementioned position information with the aforementioned map data, and uses the information on the own vehicle position in computing the next operating mode and target position. The details of a computing process performed at the behavior management section 110 will be described later using Fig. 4 to Fig. 6.

The route planning section 120 acquires the target position computed at the behavior management section 110, acquires the position information on the wheel loader V1 via the positioning device 51, and acquires the obstacle information via the obstacle detecting sensor 52.

Upon receipt of the route planning command from the behavior management section 110, the route planning section 120 computes a target route where the wheel loader V1 should move and transmits the target route to the operation generating section 130. Here, the target route is a travel route of the wheel loader V1 from the position information acquired via the positioning device 51, that is, the current position of the wheel loader V1 to the target position computed at the behavior management section 110, which is computed as a travel route that does not interfere with the obstacle acquired via the obstacle detecting sensor 52. Upon receipt of the route planning command from the behavior management section 110, the route planning section 120 computes the target route, and the target route is updated each time.

The operation generating section 130 acquires the next operating mode of the wheel loader V1 determined at the behavior management section 110, acquires the target route computed at the route planning section 120, acquires the position information on the wheel loader V1 via the positioning device 51, and acquires the obstacle information via the obstacle detecting sensor 52.

The operation generating section 130 generates the travel operation of the wheel loader V1 such that the current position of the wheel loader V1 follows the target route and transmits the generated travel operation to the travel control device 700 as a travel control signal.

Further, the operation generating section 130 generates the work operation of the bucket, such as excavation and loading, in accordance with the acquired operating mode and transmits the generated work operation to the hydraulic control device 600 as a hydraulic control signal.

Furthermore, the operation generating section 130 computes an engine speed of the engine 10 required for implementing the travel operation and the work operation and transmits the computed engine speed to the engine control device 500 as an engine control signal.

For example, as with conventional manual operation, the travel control signal may be pedal operation amounts of an accelerator and a brake and a switching signal for switching between forward and reverse travel, and the hydraulic control signal may be operation amounts of a lever that operates the lift arm 2 and a lever that operates the bucket 1.

When the wheel loader V1 reaches an end point (i.e., a target position) of the target route or the work operation corresponding to the acquired operating mode is completed, the operation generating section 130 transmits the information on determination of operation completed to the behavior management section 110.

Further, the operation generating section 130 may determine the size of the obstacle based on the obstacle information acquired via the obstacle detecting sensor 52. In this case, the operation generating section 130 may estimate, from the determination result, the degree of the impact of the size of the obstacle on the travel stability of the wheel loader V1, and decelerate the travel speed of the wheel loader V1 or perform control to stop its traveling.

For example, when the size of the obstacle is greater than a predetermined threshold, the operation generating section 130 stops traveling of the wheel loader V1. Further, when the size of the obstacle is equal to or smaller than the predetermined threshold, the operation generating section 130 decelerates the travel speed of the wheel loader V1. The threshold for the size of the obstacle is determined based on whether there is a possibility that the wheel loader V1 overturns when traveling over the obstacle. Therefore, it is possible to select more appropriate operation in accordance with the size of the obstacle through the computing process of the operation generating section 130, irrespective of the computing process result of the behavior management section 110, which will be described later.

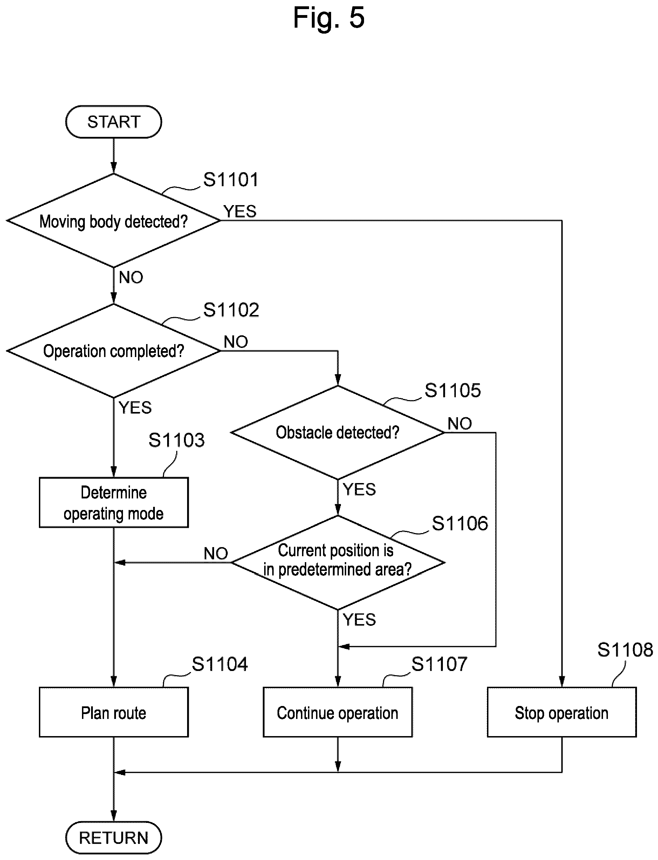

Next, with reference to Fig. 4 to Fig. 6, the content of the computing process performed at the behavior management section 110 according to the present embodiment will be described. Fig. 4 is a plan view schematically showing an example of a moving range of the wheel loader V1. Fig. 5 is a flowchart showing the computing process performed at the behavior management section 110 of the wheel loader V1. Fig. 6 is a chart showing an example of a determination process for an operating mode and a target position that is performed at the behavior management section 110 of the wheel loader V1.

As shown in Fig. 4, the moving range of the wheel loader V1 is defined as a plurality of coordinate points and areas surrounded by those coordinate points in the map data included in the communication information transmitted from the process management terminal 800.

Specifically, the moving range of the wheel loader V1 according to the present embodiment is composed of a moving area U surrounded by P1 to P4, the excavation area A surrounded by P11 to P14, and the loading area B surrounded by P21 to P24. The excavation area A includes an excavation object Q as an excavation target of the wheel loader V1. The excavation area A is an area where the excavation work for the excavation object Q is performed by the wheel loader V1 and is a work area having a limited space surrounded by a retaining wall or the like.

The loading area B includes the loading target R for loading the excavation object Q. The loading area B is an area where the loading work for the excavated excavation object Q is performed by the wheel loader V1 and is a work area having a limited space surrounded by a retaining wall or the like. The excavation area A and the loading area B correspond to the predetermined area according to the present invention. Note that the predetermined area is not limited to the excavation area A or the loading area B, but it is preferable to set a work area having a limited space in terms of work or operation of the wheel loader V1 due to the presence of a structure or an area where entry is prohibited, or the like in the surrounding.

The moving area U includes a wait position W for the wheel loader V1. The moving area U is an area where the wheel loader V1 moves between the wait position W, the excavation area A, and the loading area B and is an area that is more spacious as compared to the excavation area A and the loading area B.

The wheel loader V1 travels through the moving area U from the wait position W to the excavation area A and excavates the excavation object Q in the excavation area A. Thereafter, the wheel loader V1 travels through the moving area U from the excavation area A to the loading area B while holding the excavation object Q in the bucket 1, and loads the excavation object Q onto the loading target R in the loading area B.

After the loading ends, the wheel loader V1 repeats the excavation in the excavation area A and the loading in the loading area B until all the excavation objects Q are loaded onto the loading target R. When all the excavation objects Q are loaded onto the loading target R, the wheel loader V1 travels through the moving area U and returns to the wait position W.

In the excavation area A and the loading area B, the monitoring devices CA, CB are installed, and the monitoring devices CA, CB monitor entry of a moving body (an operator, another wheel loader, or the like). The monitoring devices CA, CB are monitoring cameras that detect a moving body other than the wheel loader V1 in the excavation area A and the loading area B, and transmit the detection results, as moving body detected information, to the moving body detected information reception device 61. The monitoring devices CA, CB may acquire the position information on the wheel loader V1 acquired by the positioning device 51. In this manner, the monitoring devices CA, CB make it easy to distinguish the wheel loader V1 from a moving body other than the wheel loader V1.

Here, the characteristic of the excavation area A and the loading area B according to the present embodiment is that at least part of each of the areas is smaller than the diameter of the minimum turn of the wheel loader V1, which thus makes it difficult for the wheel loader V1 to turn within the excavation area A and the loading area B. Further, the excavation area A and the loading area B may be areas that are monitored by the monitoring devices CA, CB for entry of a moving body.

As shown in Fig. 5, the behavior management section 110 determines whether a moving body (for example, an operator or another wheel loader) other than the wheel loader (own vehicle) V1 has been detected in the excavation area A or the loading area B, based on the moving body detected information transmitted from the monitoring devices CA, CB (S1101). When the behavior management section 110 determines that a moving body has been detected (YES in S1101), the behavior management section 110 stops the operation of the wheel loader V1 (S1108). Thereafter, the present computing process returns to the start. Therefore, irrespective of the current position or the operating mode of the wheel loader V1, the operation of the wheel loader V1 can be stopped when a moving body other than the wheel loader V1 enters the excavation area A or the loading area B so that the wheel loader V1 can be prevented from contacting the moving body.

Meanwhile, when the behavior management section 110 determines that a moving body is not detected (NO in S1101), the present computing process proceeds to S1102. In S1102, the behavior management section 110 determines whether the predetermined operation (for example, the travel operation, the excavation operation, the loading operation) corresponding to the predetermined operating mode has been completed.

Specifically, when information on the determination of operation completed is acquired from the operation generating section 130, the behavior management section 110 determines that the predetermined operation has been completed (YES in S1102). Thereafter, the present computing process proceeds to S1103. Meanwhile, when information on the determination of operation completed is not acquired from the operation generating section 130, the behavior management section 110 determines that the predetermined operation is not completed (NO in S1102). Thereafter, the present computing process proceeds to S1105.

In S1103, the behavior management section 110 determines the next operating mode of the wheel loader V1. Specifically, the behavior management section 110 determines the next operating mode of the wheel loader V1 based on the chart shown in Fig. 6 in accordance with the current position of the wheel loader V1 and the operating mode corresponding to the completed operation.

For example, when the wheel loader V1 reaches the excavation area A in the travel mode, the current position is the excavation area A and the completed operating mode is the travel mode. Thus, the behavior management section 110 determines the excavation mode as the next operating mode (see the top row of Fig. 6). At this time, the behavior management section 110 selects the excavation target position as the target position of the wheel loader V1.

Further, when the wheel loader V1 has completed the excavation mode in the excavation area A, the current position is the excavation area A and the completed operating mode is the excavation mode. Thus, the behavior management section 110 determines the travel mode as the next operating mode (see the second row from the top of Fig. 6). At this time, the behavior management section 110 selects the loading area B as the target position of the wheel loader V1. The descriptions of the bottom row and the second row from the bottom of Fig. 6 are omitted. Thereafter, the present computing process proceeds to S1104.

In S1104, the behavior management section 110 transmits a route planning command to the route planning section 120 for planning the target route from the current position of the wheel loader V1 to the target position to which the wheel loader V1 should move. Thereafter, the present computing process returns to the start.

In S1105, the behavior management section 110 determines whether an obstacle (for example, soil and sand) has been detected in the surrounding of the wheel loader V1, based on the obstacle information acquired via the obstacle detecting sensor 52. When the behavior management section 110 determines that the aforementioned obstacle is not detected (NO in S1105), the present computing process proceeds to S1107.

In S1107, the behavior management section 110 does not update the target route of the wheel loader V1 (that is, the route planning command is not transmitted to the route planning section 120), and continues the operation corresponding to the current operating mode (for example, the travel mode) of the wheel loader V1. Thereafter, the present computing process returns to the start.

Meanwhile, when the behavior management section 110 determines that the aforementioned obstacle has been detected (YES in S1105), the present computing process proceeds to S1106.

In step S1106, the behavior management section 110 determines whether the current position of the wheel loader V1 is in the predetermined area (i.e., the excavation area A or the loading area B). When the behavior management section 110 determines that the current position is in the predetermined area (YES in S1106), the present computing process proceeds to S1107, and when the behavior management section 110 determines that the current position is not the predetermined area (NO in S1106), the present computing process proceeds to S1104.

The behavior management section 110 controls the wheel loader V1 based on the detection result of the obstacle detecting sensor 52. Specifically, in S1104 and S1107 after S1106, the behavior management section 110 determines whether the obstacle should be bypassed, in accordance with the position of the wheel loader V1 when the obstacle was detected, and changes the control content of the wheel loader V1 based on the determination result.

Specifically, in a case where the position of the wheel loader V1 when the obstacle was detected is within the predetermined area (YES in S1106), in S1107, the behavior management section 110 determines that the obstacle should not be bypassed and continues the operation of the wheel loader V1 when the obstacle was detected. That is, the behavior management section 110 does not update the target route of the wheel loader V1 (that is, the route planning command is not transmitted to the route planning section 120), and performs control of continuing the operation corresponding to the current operating mode (for example, the excavation mode) of the wheel loader V1. Thereafter, the present computing process returns to the start.

Since at least part of each of the excavation area A and the loading area B is smaller than the diameter of the minimum turn of the wheel loader V1, there is no sufficient space for bypassing the obstacle. However, as in the present embodiment, when the current position of the wheel loader V1 when the obstacle was detected is in the predetermined area, the target route of the wheel loader V1 is not updated, so that for example, contact with the retaining wall or the like due to unnecessary steering operation can be prevented.

Further, even when the excavation object Q, such as soil and sand, that has dropped onto the ground surface in the excavation area A or the loading area B is detected as the obstacle, the operation corresponding to the current operating mode of the wheel loader V1 can be continued. When the excavation operation corresponding to the excavation mode is performed in the excavation area A and when the loading operation corresponding to the loading mode is performed in the loading area B, the wheel loader V1 travels at a relatively low speed and thus can continue the operation while traveling over the obstacle such as soil and sand, which enables the work to be efficiently performed by the wheel loader V1.

Meanwhile, in a case where the position of the wheel loader V1 when the obstacle was detected is outside the predetermined area (NO in S1106), in S1104, the behavior management section 110 determines that the obstacle should be bypassed and causes a travel route that bypasses the obstacle to be generated.

That is, when the position where the obstacle such as soil and sand was detected is the moving area U, the behavior management section 110 performs control of updating the target route of the wheel loader V1 so as to bypass the obstacle (that is, the route planning command for generating a travel route is transmitted to the route planning section 120). Thereafter, the present computing process returns to the start.

Since the moving area U is more spacious as compared to the excavation area A and the loading area B, there is a sufficient space for bypassing the obstacle. Since the wheel loader V1 travels at a relatively high speed when performing the travel operation corresponding to the travel mode in the moving area U, overturning risk when traveling over the obstacle, such as soil and sand, at a high speed can be avoided by bypassing the obstacle.

### <Modification of first embodiment>

Next, a modification of the wheel loader V1 according to the first embodiment will be described. The wheel loader according to the present modification differs from the aforementioned wheel loader V1 in the function of the behavior management section. Hereinafter, for the components having the functions that are identical or similar to those of the wheel loader V1 according to the first embodiment, the same reference signs as those of the wheel loader V1 are assigned and the descriptions will be omitted, and different portions will be described.

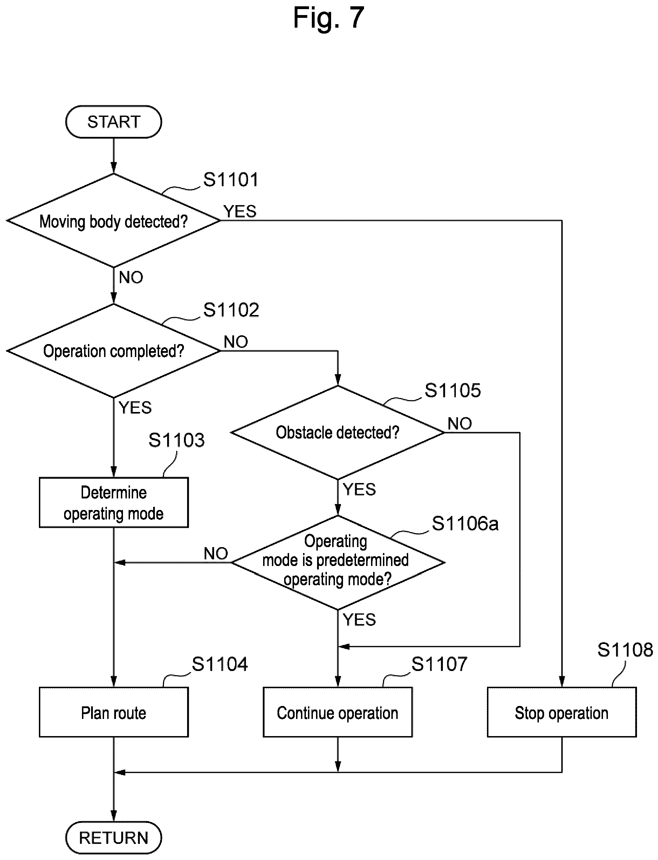

Fig. 7 is a flowchart showing the computing process performed at the behavior management section of the working machine according to the modification of the first embodiment. As shown in Fig. 7, when the behavior management section determines that an obstacle has been detected (YES in S1105), the present computing process proceeds to S1106a.

In S1106a, the behavior management section determines whether the operating mode of the wheel loader is the predetermined operating mode. Here, the predetermined operating mode is the excavation mode in which excavation of the excavation object Q is performed or the loading mode in which the excavated excavation object Q is loaded.

When the behavior management section determines that the operating mode is the predetermined operating mode (YES in S1106a), the present computing process proceeds to S1107, and when the behavior management section determines that the operating mode is not the predetermined operating mode (NO in S1106a), the present computing process proceeds to S1104. In S1104 and S1107 after S1106a, the behavior management section determines whether the obstacle should be bypassed, in accordance with the operating mode of the wheel loader V1 when the obstacle was detected, and changes the control content of the wheel loader V1 based on the determination result.

Specifically, in a case where the operating mode of the wheel loader when the obstacle was detected is the predetermined operating mode (the excavation mode or the loading mode) (YES in S1106a), in S1107, the behavior management section determines that the obstacle should not be bypassed and continues the operation of the wheel loader V1 when the obstacle was detected. That is, the behavior management section does not update the target route of the wheel loader (that is, the route planning command is not transmitted to the route planning section), and performs control of continuing the operation (for example, the excavation operation) corresponding to the current operating mode (for example, the excavation mode) of the wheel loader. Thereafter, the present computing process returns to the start.

When the wheel loader performs operation corresponding to the excavation mode or the loading mode, the wheel loader travels at a relatively low speed and thus can continue the operation while traveling over the obstacle, such as soil and sand, irrespective of the area where the wheel loader operates, which enables the work to be efficiently performed by the wheel loader V1.

Meanwhile, in a case where the operating mode of the wheel loader when the obstacle was detected is not the predetermined operating mode (the excavation mode or the loading mode) (NO in S1106a), in S1104, the behavior management section determines that the obstacle should be bypassed and causes a travel route that bypasses the obstacle to be generated. For example, in a case where the operating mode when the obstacle such as soil and sand was detected is the travel mode, the behavior management section performs control of updating the target route of the wheel loader so as to bypass the obstacle (that is, the route planning command for generating a travel route is transmitted to the route planning section). Thereafter, the present computing process returns to the start.

Since the wheel loader in the travel mode travels at a higher speed as compared to the wheel loader in the excavation mode or the loading mode, overturning risk when traveling over the obstacle, such as soil and sand, at a high speed can be avoided by bypassing the obstacle.

### <Second embodiment>

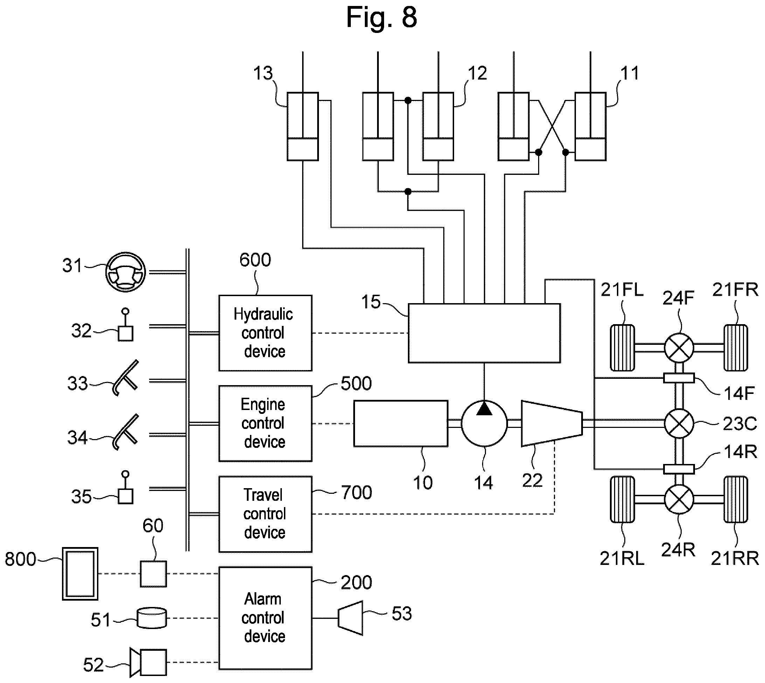

Next, with reference to Fig. 8 to Fig. 10, the wheel loader according to a second embodiment of the present invention will be described. The wheel loader according to the present embodiment differs from the wheel loader according to the first embodiment in that it includes a steering wheel 31, a work device operation lever 32, a brake pedal 33, an acceleration pedal 34, and a shift operation lever 35 for manually operating the wheel loader, in place of the automatic driving control device 100, and further, an alarm control device 200 and an alarm (alarming device) 53 are added. Hereinafter, for the components having the functions that are identical or similar to those of the aforementioned wheel loader V1, the same reference signs as those of the wheel loader V1 are assigned and the descriptions will be omitted, and different portions will be described.

Fig. 8 is a system configurational diagram schematically showing the control system of the wheel loader according to the second embodiment. As shown in Fig. 8, the hydraulic control device 600 controls the opening/closing degree of the control valve 15 in accordance with the operation amounts of the steering wheel 31, the work device operation lever 32, and the brake pedal 33. The engine control device 500 controls the engine speed of the engine 10 in accordance with the operation amount of the acceleration pedal 34. The travel control device 700 controls the change gear ratio and the rotating direction of the drive force transmission device 22 in accordance with the operation of the shift operation lever 35.

The alarm control device 200 acquires the communication information transmitted from the process management terminal 800, via the communication interface 60, acquires the position information on the wheel loader via the positioning device 51, and acquires the obstacle information in the surrounding of the wheel loader via the obstacle detecting sensor 52.

The alarm control device 200 generates an alarm control signal based on these pieces of information and transmits the signal to the alarm 53. The alarm 53 may be those alarming the operator by means of a sound volume, a melody, a light amount, a message, color, and the like. The alarm 53 may be those capable of changing the intensity of alerting the operator, as an example, and a rotating lamp may be used, for example. When the alarm 53 is a rotating lamp, the alarm intensity is changed by changing the volume and the pitch (frequency) of the sound, the brightness, the rotating speed, and the like. Note that in the present embodiment, as the example of the alarm 53, the rotating lamp is illustrated, but a monitor that displays the position of the obstacle may be adopted as the alarm 53. In this case, the intensity may be changed by means of the contrast, color, the frequency (flashing speed), and the like when the position of the obstacle is displayed by flashing.

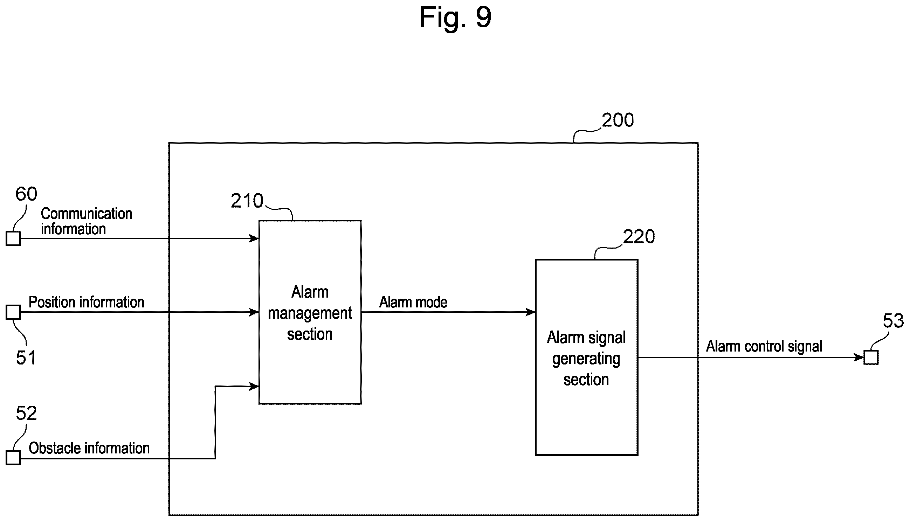

Next, with reference to Fig. 9, the function of the alarm control device 200 according to the present embodiment will be described. Fig. 9 is a functional block diagram of the alarm control device 200 of the wheel loader according to the second embodiment. The alarm control device 200 includes an alarm management section 210 and an alarm signal generating section 220. The alarm management section 210 corresponds to the control device according to the present invention.

The alarm management section 210 acquires communication information via the communication interface 60, acquires position information on the wheel loader via the positioning device 51, and acquires obstacle information via the obstacle detecting sensor 52. The alarm management section 210 determines an alarm mode based on map data indicating a moving range of the wheel loader included in the aforementioned communication information, the aforementioned position information, and the aforementioned obstacle information, and transmits the alarm mode to the alarm signal generating section 220. The details of a computing process performed at the alarm management section 210 will be described later.

The alarm signal generating section 220 acquires the alarm mode determined at the alarm management section 210, generates an alarm control signal based on the alarm mode, and transmits the alarm control signal to the alarm 53. The alarm signal generating section 220 controls the arm control signal to change the alarm intensity of the alarm 53, such a rotating lamp.

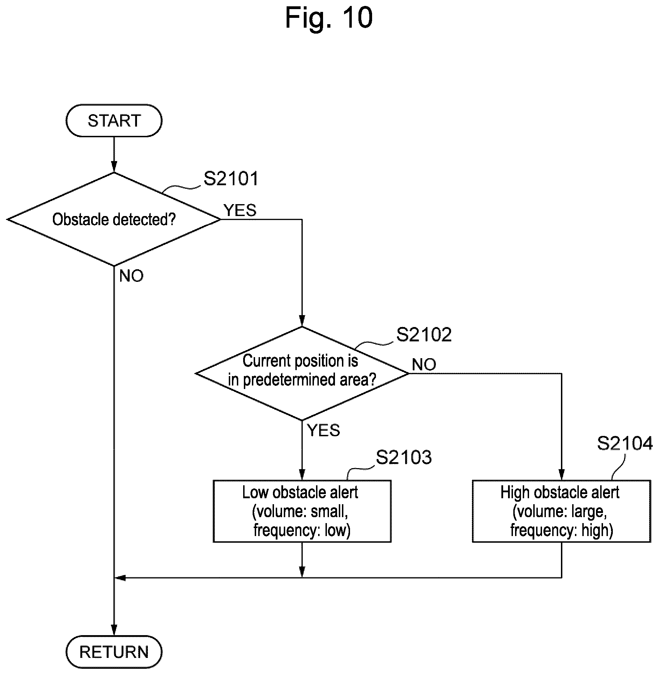

Next, with reference to Fig. 10, the content of the computing process performed at the alarm management section 210 according to the present embodiment will be described. Fig. 10 is a flowchart showing the computing process performed at the alarm management section 210 of the wheel loader according to the second embodiment.

As shown in Fig. 10, the alarm management section 210 determines whether an obstacle (for example, soil and sand) has been detected in the surrounding of the wheel loader, based on the obstacle information acquired via the obstacle detecting sensor 52 (S2101). When the alarm management section 210 determines that the aforementioned obstacle is not detected (NO in S2101), the present computing process returns to the start. Meanwhile, when the alarm management section 210 determines that the aforementioned obstacle has been detected (YES in S2101), the present computing process proceeds to S2102.

In S2102, the alarm management section 210 computes the current position in the moving range of the wheel loader by comparing the position information on the wheel loader acquired via the positioning device 51 with the map data included in the communication information and determines whether the current position is in the predetermined area (i.e., the excavation area A or the loading area B).

When the alarm management section 210 determines that the current position is in the predetermined area (YES in S2102), the present computing process proceeds to S2103, and when the alarm management section 210 determines that the current position is not the predetermined area (NO in S2102), the present computing process proceeds to S2104. In S2103 and S2104, the alarm management section 210 determines whether the obstacle should be bypassed, in accordance with the position of the wheel loader when the obstacle was detected, and changes the control content of the wheel loader based on the determination result.

Specifically, in a case where the position of the wheel loader when the obstacle was detected is within the predetermined area (YES in S2102), in S2103, the alarm management section 210 determines that the obstacle should not be bypassed and decreases the alarm intensity of the alarm 53 as compared to the case in which the position of the wheel loader when the obstacle was detected is outside the predetermined area. That is, the alarm management section 210 determines the alarm mode to be a low obstacle alert and transmits the alarm mode to the alarm signal generating section 220. When the alarm 53 is a rotating lamp, the alarm management section 210 determines the alarm mode with low-pitched small sound (small volume, low frequency) or dim and low rotating speed (small volume, low frequency).

Meanwhile, in a case where the position of the wheel loader when the obstacle was detected is outside the predetermined area (NO in S2102), in S2104, the alarm management section 210 determines that the obstacle should be bypassed and increases the alarm intensity of the alarm 53 as compared to the case in which the position of the wheel loader when the obstacle was detected is within the predetermined area. That is, the alarm management section 210 determines the alarm mode to be a high obstacle alert and transmits the alarm mode to the alarm signal generating section 220. When the alarm 53 is a rotating lamp, the alarm management section 210 determines the alarm mode with high-pitched large sound (large volume, high frequency) or bright and high rotating speed (large volume, high frequency).

In this manner, in a case where the current position of the wheel loader when the obstacle was detected is in the predetermined area (the excavation area A or the loading area B), the alarm management section 210 performs control of decreasing the alarm intensity of the alarm 53. Thus, even when the excavation object Q, such as soil and sand, that has dropped onto the ground surface in the predetermined area is detected as the obstacle, bothering of the operator by the alarm can be mitigated. Therefore, the operator can concentrate on the operation corresponding to the current operating mode (the excavation mode, the loading mode) of the wheel loader without bypassing the obstacle such as soil and sand, which enables the work to be efficiently performed by the wheel loader.

Meanwhile, in a case where the position of the wheel loader when the obstacle was detected is outside the predetermined area (travel area U), the alarm management section 210 performs control of increasing the alarm intensity of the alarm 53. Therefore, when the excavation object Q, such as soil and sand, that has dropped onto the ground surface in the travel area U is detected as the obstacle, it is possible to motivate the operator to perform operation of bypassing the obstacle.

### <Modification of second embodiment>

Next, a modification of the wheel loader according to the second embodiment will be described. The wheel loader according to the present modification differs from the wheel loader according to the second embodiment in the function of the alarm management section. Hereinafter, for the components having the functions that are identical or similar to those of the wheel loader according to the second embodiment, the same reference signs as those of the wheel loader are assigned and the descriptions will be omitted, and different portions will be described.

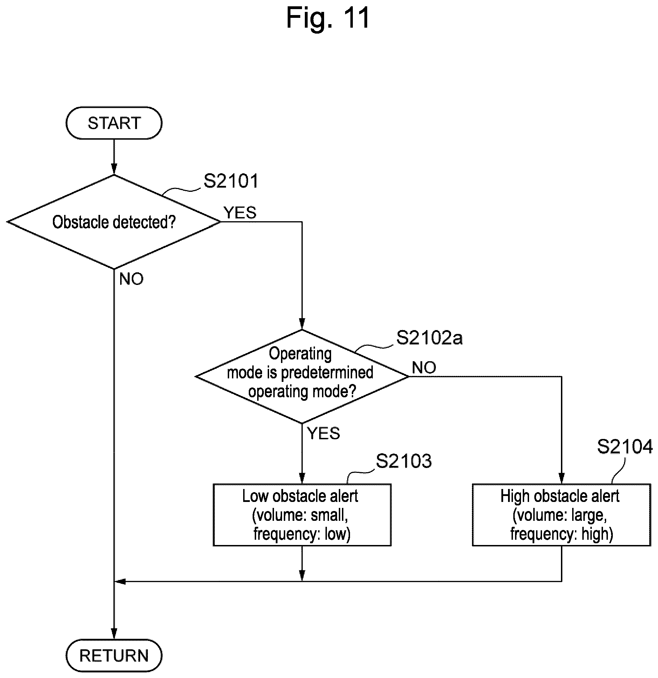

Fig. 11 is a flowchart showing a computing process performed at the alarm management section of the working machine according to the modification of the second embodiment. As shown in Fig. 11, when the alarm management section determines that an obstacle has been detected (YES in S2101), the present computing process proceeds to S2102a.

In S2102a, the alarm management section determines whether the operating mode of the wheel loader is the predetermined operating mode (the excavation mode or the loading mode). The alarm management section computes the current position in the moving range of the wheel loader by comparing the position information on the wheel loader acquired via the positioning device 51 with the map data included in the communication information and estimates the operating mode of the wheel loader based on the current position. For example, when the current position of the wheel loader is computed as the excavation area A, the alarm management section estimates that the operating mode of the wheel loader is the excavation mode.

Likewise, when the current position of the wheel loader is computed as the loading area B, the alarm management section estimates that the operating mode of the wheel loader is the loading mode. When the current position of the wheel loader is computed as the travel area U, the alarm management section estimates that the operating mode of the wheel loader is the travel mode.

When the alarm management section determines that the operating mode is the predetermined operating mode (YES in S2102a), the present computing process proceeds to S2103, and the alarm management section determines that the operating mode is not the predetermined operating mode (NO in S2102a), the present computing process proceeds to S2104. In S2103 and S2104, the alarm management section 210 determines whether the obstacle should be bypassed, in accordance with the operating mode of the wheel loader when the obstacle was detected, and changes the control content of the wheel loader based on the determination result.

Specifically, in a case where the operating mode of the wheel loader when the obstacle was detected is the predetermined operating mode (YES in S2102a), in S2103, the alarm management section determines that the obstacle should not be bypassed and decreases the alarm intensity of the alarm 53 as compared to the case in which the operating mode of the wheel loader when the obstacle was detected is the mode other than the predetermined operating mode. That is, the alarm management section determines the alarm mode to be a low obstacle alert and transmits the alarm mode to the alarm signal generating section 220.

In this manner, in a case where the operating mode of the wheel loader when the obstacle was detected is the predetermined operating mode (the excavation mode or the loading mode), the alarm management section performs control of decreasing the alarm intensity of the alarm 53. Since the wheel loader travels at a relatively low speed when performing the operation corresponding to the excavation mode or the loading mode, even when the excavation object Q, such as soil and sand, that has dropped onto the ground surface during the mode is detected as the obstacle, bothering of the operator by the alarm can be mitigated. Therefore, the operator can concentrate on the operation corresponding to the current operating mode (the excavation mode, the loading mode) of the wheel loader without bypassing the obstacle such as soil and sand, which enables the work to be efficiently performed by the wheel loader.

Meanwhile, in a case where the operating mode of the wheel loader when the obstacle was detected is not the predetermined operating mode (NO in S2102a), in S2104, the alarm management section determines that the obstacle should be bypassed and increases the alarm intensity of the alarm 53 as compared to the case in which the position of the wheel loader when the obstacle was detected is the predetermined operating mode. That is, the alarm management section determines the alarm mode to be a high obstacle alert in a case where the operating mode when the obstacle such as soil and sand was detected is the travel mode, and transmits the alarm mode to the alarm signal generating section 220.

Since the wheel loader in the travel mode travels at a higher speed as compared to the wheel loader in the excavation mode or the loading mode, when the excavation object Q, such as soil and sand, that has dropped onto the ground surface in the travel area U is detected as the obstacle, it is possible to motivate the operator to perform operation of bypassing the obstacle. Overturning risk when traveling over the obstacle, such as soil and sand, at a high speed can be avoided by bypassing the obstacle.

Preferable embodiments of the present invention have been described above, but the present invention is not limited to the wheel loader according to the aforementioned embodiments and encompasses all the aspects included in the concept and the claims of the present invention. For example, in the embodiments described above, the present invention is applied to the wheel loader including the bucket as a work implement, but the target to which the present invention is applied is not limited thereto, and the present invention is also applicable to working machines such as a hydraulic shovel, other than the wheel loader.

Further, the aforementioned embodiments have been described in detail for easier understanding of the present invention, and are not necessarily limited to those including all the described components. Furthermore, the components may be selectively combined, as appropriate, so as to achieve the aforementioned object and advantageous effects. For example, the shape, the material, the arrangement, the size, and the like of the components in the aforementioned embodiments may be changed in accordance with the specific aspect of the present invention, as appropriate.

### Reference Signs List

CA, CB Monitoring camera (monitoring device)
A Excavation area (predetermined area)
B Loading area (predetermined area)
V1 Wheel loader (working machine)
52 Obstacle detecting sensor
53 Alarm (alarming device)
61 Moving body detected information reception device (moving body acquisition device)
110 Behavior management section (control device)
210 Alarm management section (control device)

## Claims

1. A working machine comprising:
an obstacle detecting sensor that detects an obstacle; and
a control device that controls the working machine based on a detection result of the obstacle detecting sensor,
wherein the control device determines whether the obstacle should be bypassed, in accordance with a position of the working machine within a work site when the obstacle is detected or an operating mode of the working machine when the obstacle is detected, and changes a control content of the working machine based on a determination result.

2. The working machine according to claim 1, wherein in a case where the position of the working machine when the obstacle is detected is within a predetermined area where a work is performed, the control device determines that the obstacle should not be bypassed and continues an operation of the working machine when the obstacle is detected.

3. The working machine according to claim 2, wherein in a case where the position of the working machine when the obstacle is detected is outside the predetermined area, the control device determines that the obstacle should be bypassed and causes a travel route that bypasses the obstacle to be generated.

4. The working machine according to claim 1, comprising a moving body acquisition device that acquires information on a moving body other than own vehicle in a predetermined area from a monitoring device installed in the predetermined area where a work is performed,
wherein the control device stops an operation of the working machine based on the information on the moving body acquired from the moving body acquisition device.

5. The working machine according to claim 1, comprising an alarming device that alerts that the obstacle is detected,
wherein in a case where the position of the working machine when the obstacle is detected is within a predetermined area where a work is performed, the control device determines that the obstacle should not be bypassed and decreases an alarm intensity of the alarming device as compared to a case in which the position of the working machine when the obstacle is detected is outside the predetermined area.

6. The working machine according to any one of claims 2 to 5, wherein the predetermined area includes an excavation area where an excavation object is excavated and a loading area where the excavation object that is excavated is loaded.

7. The working machine according to claim 1, wherein in a case where the operating mode of the working machine when the obstacle is detected is a predetermined operating mode, the control device determines that the obstacle should not be bypassed and continues an operation of the working machine when the obstacle is detected.

8. The working machine according to claim 7, wherein in a case where the operating mode of the working machine when the obstacle is detected is not the predetermined operating mode, the control device determines that the obstacle should be bypassed and causes a travel route that bypasses the obstacle to be generated.

9. The working machine according to claim 1, comprising an alarming device that alerts that the obstacle is detected,
wherein in a case where the operating mode of the working machine when the obstacle is detected is a predetermined operating mode, the control device determines that the obstacle should not be bypassed and decreases an alarm intensity of the alarming device as compared to a case in which the operating mode of the working machine when the obstacle is detected is not the predetermined operating mode.

10. The working machine according to any one of claims 7 to 9, wherein the predetermined operating mode includes an excavation mode in which an excavation object is excavated and a loading mode in which the excavation object that is excavated is loaded.
